(19)

Europäisches Patentamt
European Patent Office
Office européen des brevets

(11) **EP 4 317 326 A1**

(12) **EUROPEAN PATENT APPLICATION**
published in accordance with Art. 153(4) EPC

(43) Date of publication:
**07.02.2024 Bulletin 2024/06**

(21) Application number: **22779878.2**

(22) Date of filing: **09.03.2022**

(51) International Patent Classification (IPC):
*C08L 101/02* (2006.01)     *B32B 27/32* (2006.01)
*C08L 23/04* (2006.01)     *C08L 23/26* (2006.01)
*C08L 29/04* (2006.01)     *C08L 77/00* (2006.01)

(52) Cooperative Patent Classification (CPC):
**B32B 27/32; C08L 23/04; C08L 23/26; C08L 29/04;**
**C08L 77/00; C08L 101/02**

(86) International application number:
**PCT/JP2022/010189**

(87) International publication number:
**WO 2022/209655 (06.10.2022 Gazette 2022/40)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **29.03.2021   JP 2021055948**

(71) Applicant: **Mitsui Chemicals, Inc.**
**Tokyo 104-0028 (JP)**

(72) Inventors:
• **SHIOZAKI, Nao**
  **Ichihara-shi, Chiba 299-0108 (JP)**

• **NODA, Kiminori**
  **Ichihara-shi, Chiba 299-0108 (JP)**
• **EGAWA, Makoto**
  **Ichihara-shi, Chiba 299-0108 (JP)**
• **KAI, Yuki**
  **Ichihara-shi, Chiba 299-0108 (JP)**
• **HOYA, Hiroshi**
  **Ichihara-shi, Chiba 299-0108 (JP)**

(74) Representative: **Hoffmann Eitle**
**Patent- und Rechtsanwälte PartmbB**
**Arabellastraße 30**
**81925 München (DE)**

(54) **POLAR RESIN COMPOSITION AND MULTILAYER BODY**

(57)     [Problem] To provide a laminate having a polar resin layer, which is excellent in transparency and mechanical strength (in particular impact resistance), and a polar resin composition for forming the polar resin layer of the laminate having such properties.

[Solution] A polar resin composition including 5 to 30% by mass of an ethylenic polymer (A), 40 to 85% by mass of a polar resin component (B), and 10 to 40% by mass of a modified ethylene/$\alpha$-olefin copolymer (C) obtained by modifying an ethylene/$\alpha$-olefin copolymer (C0) with an unsaturated carboxylic acid or a derivative thereof and having a melt flow rate (190°C, 2.16 kg load) of 0.1 to 50 g/10 minutes, provided that the sum of proportions of the (A), (B), and (C) is 100% by mass.

EP 4 317 326 A1

**Description**

Technical Field

The present invention relates to a polar resin composition and a laminate, and more specifically relates to a polar resin composition containing a polar resin component and a laminate including a polar resin layer composed of the polar resin composition.

Background Art

Polyolefin resins, representative examples thereof including polyethylene and polypropylene, have been used in various fields because of their low energy consumption for production, light weight and excellent recyclability.

However, polyolefin resins in general do not contain polar groups in their molecules, and therefore they have poor compatibility with polar resins such as polyamide, polyester, and an ethylene-vinyl alcohol copolymer (EVOH), resulting in a problem of making it difficult to utilize them by blending or stacking with these materials. In order to improve low compatibility between polyolefins and polar polymers, the mixture thereof may be sometimes further compounded with polyolefinic grafted polymers.

For example, Patent Literature 1 discloses a laminate having a polyolefin layer/a regrind layer/an ethylene-vinyl alcohol copolymer layer/a regrind layer/a polyolefin layer, stacked in this order, wherein the regrind layer is composed of a composition including (A) an ethylene-vinyl alcohol copolymer, (B) a polyolefin, and (C) a grafted polymer using a polyolefin, and the literature also describes that the laminate is excellent in, for example, impact resistant property.

Patent Literature 2 discloses a multilayer laminate having a recycled layer composed of an easily recyclable resin composition (D) including a polyolefin resin (B), an ethylene/vinyl alcohol copolymer (C), and a composition (A) including a modified polyethylene resin obtained by graft-modifying a polyethylene resin with, for example, an unsaturated carboxylic acid; and it also discloses, as a specific example of the modified polyethylene resin, a copolymer obtained by graft-modifying an ethylene/butene copolymer with maleic anhydride and a peroxide. Furthermore, the literature discloses that the modified polyethylene resin composition (A) has compatibilization ability to enhance the polyolefin resin (B) and the ethylene vinyl alcohol copolymer (C), resulting in that the multilayer laminate has excellent mechanical strengths such as an impact strength and a tensile elongation as well as its excellent appearance without yellowing as well.

Patent Literature 3 discloses that compounding of a low viscosity ethylene/α-olefin interpolymer modified with, for example, maleic anhydride compatibilizes an ethylenic polymer and a polar polymer, leading to improved optical properties and tensile properties of, for example, a film obtained from a composition including these polymers.

Citation List

Patent Literature

[Patent Literature 1] JP5-147177A
[Patent Literature 2] JP9-302170A
[Patent Literature 3] JP2015-535311A

Summary of Invention

Technical Problem

However, there has been room for further improvements in terms of transparency and mechanical strengths (in particular impact resistance, or impact resistance and puncture resistance) in conventional laminates with layers containing polar resins.

Thus, an object of the present invention is to provide a laminate having a layer including a polar resin with excellent transparency and mechanical strengths (in particular impact resistance, or preferably impact resistance and puncture resistance), and a polar resin composition for forming a polar resin layer of the laminate having such properties.

Solution to Problem

The present invention relates to, for example, [1] to [9] below.

[1] A polar resin composition comprising:

5 to 30% by mass of an ethylenic polymer (A),
40 to 85% by mass of a polar resin component (B), and
10 to 40% by mass of a modified ethylene/α-olefin copolymer (C) obtained by modifying an ethylene/α-olefin copolymer (C0) with an unsaturated carboxylic acid or a derivative thereof and satisfying the following requirement (C-1), provided that the sum of proportions of the ethylenic polymer (A), the polar resin component (B), and the copolymer (C) is 100% by mass:
Requirement (C-1): The melt flow rate (190°C, 2.16 kg load) is 0.1 to 50 g/10 minutes.

[2] The polar resin composition according to [1], wherein the modified ethylene/α-olefin copolymer (C) satisfies the following requirement (C-2):
Requirement (C-2): The density is 850 to 930 $kg/m^3$.
[3] The polar resin composition according to [1] or [2], wherein the resin component (B) is a mixture comprising:

50 to 90% by mass of an ethylenic polymer (BA),
5 to 49.5% by mass of a polar resin (BB), and
0.5 to 5% by mass of a modified ethylene/α-olefin copolymer (BC), provided that the sum of proportions of the ethylenic polymer (BA), the polar resin (BB), and the modified ethylene/α-olefin copolymer (BC) is 100% by mass.

[4] The polar resin composition according to any one of [1] to [3], wherein the polar resin component (B) comprises a polar resin (BB) selected from the group consisting of a polyamide resin, a polyester resin, an ethylene/vinyl alcohol copolymer, an ethylene/vinyl acetate copolymer, and combinations thereof.
[5] The polar resin composition according to [4], wherein the polyamide resin is an aliphatic polyamide resin.
[6] A laminate comprising a polyethylene layer, a polar resin layer formed of the polar resin composition according to any one of [1] to [5], and a polyethylene layer, stacked in this order.
[7] The laminate according to [6] having a film impact strength measured in accordance with JIS P8134 of 20 kJ/m or more.
[8] The laminate according to [6] or [7] having an internal haze measured in accordance with JIS K7136 of 10% or less.
[9] A regrind material obtained by pulverizing a formed product of the polar resin composition according to any one of [1] to [5].

Advantageous Effects of Invention

A laminate having a layer including the polar resin composition of the present invention, has excellent transparency and mechanical strengths (in particular impact resistance, or preferably impact resistance and puncture resistance). Moreover, according to the polar resin composition of the present invention, a polar resin layer of the laminate having such properties can be formed.

Description of Embodiments

The present invention will be more specifically described below.

[Polar resin composition]

The polar resin composition according to the present invention contains an ethylenic polymer (A), a polar resin component (B), and a modified ethylene/α-olefin copolymer (C).

<Ethylenic polymer (A)>

Examples of the ethylenic polymer (A) include high-density polyethylene, low-density polyethylene (LDPE), linear low-density polyethylene (LLDPE), and an ethylene/α-olefin (with 3 or more carbon atoms) copolymer.
A MFR (190°C, 2.16 kg load) of the ethylenic polymer (A) is preferably 0.5 to 50 g/10 minutes, more preferably 0.5 to 25 g/10 minutes, further preferably 0.5 to 10 g/10 minutes, and particularly preferably 1 to 10 g/10 minutes. The MFR (190°C, 2.16 kg load) of the ethylenic polymer (A) within this range renders excellent formability.
The density of the ethylenic polymer (A) is preferably 860 to 960 $kg/m^3$, more preferably 880 to 950 $kg/m^3$, further preferably 900 to 945 $kg/m^3$, and preferably 920 to 940 $kg/m^3$. The density of the ethylenic polymer (A) within this range results in excellent formability and rigidity.

A proportion of the ethylenic polymer (A) (excluding an ethylenic polymer (BA) contained in the polar resin component (B) described below) in the polar resin composition of the present invention is 5 to 30% by mass.

The lower limit value of the proportion of the ethylenic polymer (A) in the polar resin composition of the present invention is preferably 5% by mass, more preferably 6% by mass, and further preferably 8% by mass. The proportion of the ethylenic polymer (A) within the lower limit value or more results in providing excellent formability and excellent mechanical strengths.

The upper limit value of the proportion of the ethylenic polymer (A) in the polar resin composition of the present invention is, on the other hand, preferably 29% by mass, more preferably 28% by mass, and further preferably 25% by mass.

<Polar resin component (B)>

The polar resin component (B) is a component containing a polar resin (BB).

The polar resin (BB) is preferably selected from the group consisting of a polyamide resin, a polyester resin, an ethylene/vinyl alcohol copolymer, an ethylene/vinyl acetate copolymer, and combinations thereof, and more preferably selected from the group consisting of a polyamide and an ethylene/vinyl alcohol copolymer, and combinations thereof, and further preferably contains a polyamide resin.

Of the aforementioned polyamide resins, preferable are aliphatic polyamide resins, and more preferable are 6 nylon, 6,6 nylon, 11 nylon, and 12 nylon.

The melting point of the polyamide resin is preferably 150°C to 330°C and more preferably 150 to 270°C.

In the present invention, a blend of two or more polyamides, such as a mixture of 6 nylon and 6,6 nylon, can also be used as the polyamide resin.

The ethylene/vinyl alcohol copolymer is not particularly limited, and is a copolymer mainly having a constituent unit derived from ethylene and a constituent unit derived from a vinyl alcohol. The ethylene/vinyl alcohol copolymer is obtained, for example, by saponifying a copolymer composed of ethylene and a vinyl ester by using, for example, an alkali catalyst. Examples of a vinyl ester include a vinyl acetate as a representative compound, and other fatty acid vinyl esters such as vinyl propionate, and vinyl pivalate can also be used.

The ethylene/vinyl alcohol copolymer can also be copolymerized with, for example, a vinyl silane compound, propylene, butylene, an unsaturated carboxylic acid or esters thereof, and a vinyl pyrrolidone as copolymerization components.

The ethylene/vinyl alcohol copolymer preferably has a constituent unit derived from ethylene in an amount of 20 to 60 mol% and more preferably 25 to 50 mol%.

A MFR (190°C, 2.16 kg load) of the ethylene/vinyl alcohol copolymer is preferably 0.1 to 50 g/10 minutes, more preferably 0.5 to 20 g/10 minutes, and further preferably 0.7 to 10 g/10 minutes.

A proportion of the polar resin (BB) in the polar resin component (B) is preferably from 5 to 49.5% by mass and more preferably from 10 to 39.5% by mass.

The polar resin component (B) may further contain an ethylenic polymer (BA). Specific examples of the ethylenic polymer (BA) include specific examples of the ethylenic polymer (A). The ethylenic polymer (BA) may be the same as or different from the ethylenic polymer (A).

A proportion of the ethylenic polymer (BA) in the polar resin component (B) is preferably 50 to 90% by mass and more preferably 60 to 80% by mass.

The polar resin component (B) may further contain a modified ethylene/α-olefin copolymer (BC). Specific examples of the modified ethylene/α-olefin copolymer (BC) include the specific examples of the modified ethylene/α-olefin copolymer (C) described below. The modified ethylene/α-olefin copolymer (BC) may be the same as or different from the modified ethylene/α-olefin copolymer (C) described below.

A proportion of the modified ethylene/α-olefin copolymer (BC) in the polar resin component (B) is preferably 0.5 to 5% by mass and more preferably 0.5 to 1.5% by mass.

The polar resin component (B) may also contain various additives that may be contained in a resin formed body containing the polar resin, in addition to the aforementioned components.

A proportion of the polar resin component (B) in the polar resin composition of the present invention is 40 to 85% by mass.

The lower limit value of the proportion of the polar resin component (B) in the polar resin composition of the present invention is preferably 42% by mass, more preferably 45% by mass, and further preferably 50% by mass.

The upper limit value of the proportion of the polar resin component (B) in the polar resin composition of the present invention is preferably 83% by mass, more preferably 80% by mass, and further preferably 70% by mass. The proportion of the polar resin component (B) within the above upper limit value or less results in providing the laminate of the present invention, having excellent formability, mechanical strengths, and transparency.

The polar resin component (B) is prepared by mixing the polar resin (BB), the ethylenic polymer (BA), the modified ethylene/α-olefin copolymer (BC) and optionally additives, and preferably by melt kneading and then pelletizing them.

<Modified ethylene/α-olefin copolymer (C)>

The modified ethylene/α-olefin copolymer (C) is the one obtained by modifying an ethylene/α-olefin copolymer (C0) (which may be a composition of two or more types of ethylene/α-olefin copolymers) satisfying the following requirements (C0-1) and (C0-2) with an unsaturated carboxylic acid or a derivative thereof.

The modified ethylene/α-olefin copolymer (C) functions as a compatibilizer, i.e., it is considered to compatibilize the ethylenic polymer (A) and the polar resin component (B).

<<Ethylene/α-olefin copolymer (C0)>>

The α-olefin preferably has 3 to 10 carbon atoms and more preferably 3 to 8 carbon atoms.

Examples of the α-olefin include propylene, 1-butene, 1-pentene, 1-hexene, 4-methyl-1-pentene, and 1-octene with 1-butene being preferred.

The α-olefin may be used singly or two or more types thereof may be combined for use.

Specific examples of an ethylene/α-olefin copolymer (before modification) include an ethylene/propylene copolymer, an ethylene/1-butene copolymer, an ethylene/1-hexene copolymer, an ethylene/4-methyl-1-pentene copolymer, and an ethylene/1-octene copolymer, with the ethylene/1-butene copolymer being preferred among them. The ethylene/α-olefin copolymer is usually a random copolymer. The ethylene/α-olefin copolymers also include LLDPE.

The ethylene/α-olefin copolymer contains constituent units derived from ethylene as a major component (50% by mass or more relative to the total constituent units).

Requirement (C0-1):

The melt flow rate (190°C, 2.16 kg load) of the ethylene/α-olefin copolymer (C0) is preferably 0.1 to 50 g/10 minutes, more preferably 0.2 to 45 g/10 minutes, further preferably 0.5 to 30 g/10 minutes, and particularly preferably 0.5 to 20 g/10 minutes.

The melt flow rate within the above lower limit value or more results in providing the laminate of the present invention having excellent formability.

Requirement (C0-2):

The density of the ethylene/α-olefin copolymer (C0) is preferably 850 to 930 kg/m$^3$, more preferably 855 to 925 kg/m$^3$, further preferably 860 to 890 kg/m$^3$, and particularly preferably 865 to 875 kg/m$^3$. Since the density is within the above lower limit value or more, the laminate of the present invention has excellent formability and rigidity. Since the density is within the above upper limit value or less, the laminate of the present invention has excellent mechanical strengths (in particular impact resistance and preferably impact resistance and puncture resistance).

<<Modified ethylene/α-olefin copolymer (C)>>

Examples of the unsaturated carboxylic acid include acrylic acid, methacrylic acid, maleic acid, fumaric acid, and itaconic acid.

Examples of the derivatives include acid anhydrides such as maleic anhydride, endic anhydride (cis-5-norbornene-endo-2,3-dicarboxylic anhydride), itaconic anhydride, and citraconic anhydride;

esters such as methyl acrylate, methyl methacrylate, ethyl acrylate, ethyl methacrylate, glycidyl acrylate, monoethyl maleate, diethyl maleate, monomethyl fumarate, dimethyl fumarate, monomethyl itaconate, and diethyl itaconate;
amides such as acrylamide, methacrylamide, maleic acid monoamide, maleic acid diamide, maleic acid-N-monoethylamide, maleic acid-N,N-diethylamide, maleic acid-N-monobutylamide, maleic acid-N,N-dibutylamide, fumaric acid monoamide, fumaric acid diamide, fumaric acid-N monobutylamide, and fumaric acid-N,N-dibutylamide;
imides such as maleimide, N-butylmaleimide, and N-phenylmaleimide;
metal salts such as sodium acrylate, sodium methacrylate, potassium acrylate, and potassium methacrylate.

Of these unsaturated carboxylic acids and their derivatives, preferred are maleic acid and maleic anhydride, with maleic anhydride being more preferred.

The modified ethylene/α-olefin copolymer (C) may be used singly or in combinations with two or more thereof.

Ethylene/α-olefin copolymers can be modified with unsaturated carboxylic acids or derivatives thereof by conventionally publicly known methods, such as those described in the paragraph [0016] of patent literature WO2012/133008.

A degree of modification of the modified ethylene/α-olefin copolymer (C), defined by the formula below and calculated based on a peak intensity at wavenumber 1780 cm$^{-1}$ assigned to a carbonyl group as measured by Fourier transform infrared spectroscopy, is, for example, 0.1 to 20% by mass, preferably 0.2 to 10% by mass, and more preferably 0.3 to 5% by mass. When the degree of modification of the modified ethylene/α-olefin copolymer (C) is within this range, the laminate of the present invention has excellent formability, mechanical strengths, and transparency.

```
Degree of modification (grafted amount) (% by mass) =

(total mass of constituent units having a structure derived

from a monomer having in the molecule an ethylenically

unsaturated group and a group derived from an unsaturated

carboxylic acid or derivatives thereof)/(mass of modified

ethylene/α-olefin copolymer (C)) × 100
```

Requirement (C-1):

The melt flow rate (in accordance with ASTM D1238, 190°C, 2.16 kg load) of the modified ethylene/α-olefin copolymer (C) is 0.1 to 50 g/10 minutes, preferably 0.2 to 45 g/10 minutes, more preferably 0.3 to 43 g/10 minutes, further preferably 0.5 to 30 g/10 minutes, and particularly preferably 0.5 to 20 g/10 minutes.

When the melt flow rate is the above lower limit value or more, the laminate of the present invention has excellent formability. When the melt flow rate is the upper limit value or less, the laminate of the present invention has an excellent mechanical strength (in particular impact resistance and preferably impact resistance and puncture resistance).

The laminate of the present invention has excellent mechanical strengths (in particular impact resistance and preferably impact resistance and puncture resistance) because of its melt flow rate being the upper limit value or less. The reason therefore is presumed to be increased entanglements of molecular chains of the modified ethylene/α-olefin copolymer (C) present at interfaces with the polar resin (BB) contained in the polar resin component (B), the ethylenic polymer (A), and the ethylenic polymer (BA).

Requirement (C-2):

The density of the modified ethylene/α-olefin copolymer (C) is, for example, 850 to 930 kg/m$^3$, preferably 855 to 925 kg/m$^3$, more preferably 860 to 890 kg/m$^3$, further preferably 863 to 887 kg/m$^3$, and particularly preferably 865 to 875 kg/m$^3$.

In the case of the density being the lower limit value or more, the laminate of the present invention has excellent formability and rigidity. In the case of the density being the upper limit value or less, the laminate of the present invention has excellent mechanical strengths (in particular impact resistance and preferably impact resistance and puncture resistance).

A proportion of the modified ethylene/α-olefin copolymer (C) in the polar resin composition according to the present invention is 10 to 40% by mass.

The lower limit value of the proportion of the modified ethylene/α-olefin copolymer (C) in the polar resin composition of the present invention is preferably 11% by mass, more preferably 12% by mass, and further preferably 150 by mass. The upper limit value of the proportion of the modified ethylene/α-olefin copolymer (C) in the polar resin composition of the present invention is, on the other hand, preferably 39% by mass, more preferably 38% by mass, and further preferably 35% by mass. When the proportion of the modified ethylene/α-olefin copolymer (C) stays within the range, the laminate of the present invention has excellent transparency and rigidity.

[Laminate]

The laminate according to the present invention is a laminate having a polyethylene layer, a polar resin layer and a polyethylene layer, stacked in this order, and wherein the polar resin layer is formed of the polar resin composition according to the present invention described above.

<Polyethylene layer>

The polyethylene layer is a layer composed of polyethylene, and examples of the polyethylene include ethylenic polymers such as high-density polyethylene, low-density polyethylene (LDPE), linear low-density polyethylene (LLDPE), an ethylene/$\alpha$-olefin (with 3 or more carbon atoms) copolymer.
The thicknesses of the two polyethylene layers are each independently usually from 3 to 50 pm, preferably from 3 to 50 pm, more preferably from 4 to 40 pm, further preferably from 5 to 20 pm, and particularly preferably from 6 to 15 pm.

<Polar resin layer>

The polar resin layer is a layer formed of the polar resin composition according to the present invention.
The polar resin layer can be formed by melt kneading the polar resin composition according to the present invention by using, for example, an extruder, and then shaping the resultant.
The thickness of the polar resin layer is usually 4 to 300 pm, preferably 15 to 150 pm, more preferably 25 to 90 pm, further preferably 30 to 70 pm, and particularly preferably 40 to 60 pm.

<Optional layers>

The laminate according to the present invention may further have a layer other than the two polyethylene layers and the polar resin layer (hereinafter also described as "optional layer"). A type, thickness, number, and position of the optional layer in the laminate are not particularly limited, and can be appropriately set with reference to conventionally publicly known laminates.

(Laminate)

The laminate according to the present invention is usually in the form of film or sheet, and its thickness is usually from 10 to 360 pm, preferably from 20 to 300 pm, more preferably from 30 to 190 pm, further preferably from 40 to 110 pm, and particularly preferably from 50 to 90 pm.
In each layer constituting the laminate according to the present invention, additives such as fillers, stabilizers, nucleating agents, antistatic agents, flame retardants, and foaming agents, may be compounded to the extent that the effects of the present invention are not impaired.
A film impact strength of the laminate according to the present invention, as measured in accordance with JIS K7136, is preferably 14 kJ/m or more, more preferably 16 kJ/m or more, further preferably 18 kJ/m or more, and particularly preferably 20 kJ/m or more, the upper limit thereof may be, for example, 40 kJ/m.
The internal haze of the laminate according to the present invention, as measured in accordance with JIS K7136, is preferably 10% or less and more preferably 6% or less, the lower limit thereof may be, for example, 0.1%.

(Production method of laminate)

The laminate according to the present invention can be produced by conventionally publicly known methods, except that the polar resin layer is formed of the polar resin composition of the present invention as described above. Examples of the production method include a method including separately supplying a raw material for the polyethylene layer, a raw material for the polar resin layer (i.e., the polar resin composition of the present invention), and a raw material for another polyethylene layer to respective extruders, melting each therein, then stacking them after having been merged, and extruding the obtained laminate from a T-die into a sheet form (co-extrusion method).

(Laminate)

As examples of applications of the laminate according to the present invention, it is used for packaging materials, in particular, materials for packaging foodstuffs, pharmaceuticals, industrial parts, and electronic materials, for example. The laminate can also be applied, for example, to packaging films for inner bags of back-in-boxes, which are often filled with highly fluid materials such as liquids, or to packaging films such as pillow packaging and vacuum-formed packaging, which are used as packaging of processed meats, processed marine products and electronic materials. In particular, the laminate can be suitably used as packaging films for electronic components such as capacitors with hard corners, or packaging films for meat with bones, food containing a lot of spices and foods with irregularly shaped and hard portions such as shells.

Examples

The present invention will be described by way of Examples, however, the present invention is not limited to Examples below.

[Measurement method and evaluation method]

<<Raw materials>>

The properties of the raw materials (polymers) used in Examples and the like were measured as follows.

(Degree of modification)

The degree of modification (maleic anhydride content) of a compatibilizer, expressed in the following formula was determined from a separately prepared calibration curve based on the peak intensity at wavenumber 1780 cm$^{-1}$ assigned to a carbonyl group measured by FT-IR.

```
Degree of modification (% by mass) = (total mass of

constituent units having a structure derived from a monomer

having in the molecule an ethylenically unsaturated group and

a group derived from maleic anhydride)/mass of

compatibilizer) × 100
```

(Melt flow rate)

The melt flow rate (MFR) was measured in accordance with ASTM D1238 at 190°C and a load of 2.16 kg.

(Density)

The density was measured in accordance with ASTM D1505.

<<Laminate film>>

Properties of the laminate films produced in Examples and the like were measured or evaluated as follows.

(Tensile properties)

A test piece with 15 mm wide × 150 mm long was cut from the 70 $\mu$m thick film obtained in Examples and the like. Then, in accordance with JIS K7127, a tensile modulus (YM) (unit: MPa), tensile elongation at break (EL) (unit: %) and tensile strength at break (TS) (unit: MPa) of the test piece were measured using a universal material testing machine "AG-X-5" manufactured by Shimadzu Corporation under the conditions of a distance of 50 mm between chucks, a tensile rate of 300 mm/min and a temperature of 23°C.

(Puncture energy (puncture resistance))

A universal material testing machine "AG-5kNX" manufactured by Shimadzu Corporation was used to measure energy required to puncture a film sample with a needle with a tip having a shape of 1 mm $\varphi$ at a rate of 50 mm/min and - 20°C and pierce it through in accordance with JIS Z1707 (hereinafter referred to as "puncture energy").

(Film impact strength (impact resistance))

The film impact strength at -20°C was measured by using a film impact tester with an impact head having a spherical shape: 1 inch φ, manufactured by Toyo Seiki Seisaku-sho, Ltd., in accordance with JIS P8134.

(Internal haze (transparency))

A haze meter "HM-150" manufactured by Murakami Color Research Laboratory was used to measure the films (thickness of 70 μm) fabricated in Examples and the like in cyclohexanol, in accordance with JIS K7136 and to calculate an internal haze in accordance with the following formula.

$$\text{Internal haze (\%)} = 100 \times \text{(amount of diffused transmitted light)/(total amount of transmitted light)}$$

[Raw materials]

The polymers used as raw materials in Examples and the like are as follows.

- LLDPE-1:
  A commercially available linear low-density polyethylene (MFR (190°C, 2.16 kg load) 15 g/10 minutes, density 914 kg/m$^3$)
- LLDPE-2:
  A commercially available linear low-density polyethylene (MFR (190°C, 2.16 kg load) 19 g/10 minutes, density 918 kg/m$^3$)
- LLDPE-3:
  A commercially available linear low-density polyethylene (MFR (190°C, 2.16 kg load) 3.4 g/10 minutes, density 923 kg/m$^3$)
- EBR-1:
  A commercially available ethylene/1-butene copolymer (MFR (190°C, 2.16 kg load) 0.5 g/10 minutes, density 870 kg/m$^3$)
- EBR-2:
  A commercially available ethylene/1-butene copolymer (MFR (190°C, 2.16 kg load) 35 g/10 minutes, density 870 kg/m$^3$)
- EBR-3:
  A commercially available ethylene/1-butene copolymer (MFR (190°C, 2.16 kg load) 3.6 g/10 minutes, density 870 kg/m$^3$)
- PA6:
  A polyamide resin (6-nylon) (AMILAN (registered trademark) CM1021XF, melting point 225°C, manufactured by Toray Industries, Inc.)
- EVOH:
  An ethylene/vinyl alcohol resin (EVAL (registered trademark) F101A, 32 mol% content of constituent units derived from ethylene, MFR (190°C, 2.16 kg load): 1.6 g/10 minutes, manufactured by KURARAY CO., LTD.)

[Preparation of compatibilizer]

The following are preparation methods of the compatibilizers (Q-1) to (Q-5) used in Examples described below.

[Preparation Example 1]

(Preparation of compatibilizer (Q-1))

A solution of 150 g of maleic anhydride (MAH) and 6 g of PERHEXA (registered trademark) 25B (manufactured by Nippon Yushi Industry Co., Ltd.) dissolved in acetone, and 10 kg of LLDPE-1 were blended to obtain a blend 1. The blend 1 was then fed through a hopper of a twin-screw extruder with a screw diameter of 32 mm and L/D = 42, and extruded into strands at a resin temperature of 200°C, screw speed of 240 rpm, and discharge rate of 12 kg/hr. The resulting strands were cooled sufficiently and granulated to obtain a compatibilizer (Q-1). Table 1 shows the physical properties of compatibilizer (Q-1).

(Preparation of compatibilizer (Q-2))

A solution of 60 g of MAH and 2 g of PERHEXA 25B dissolved in acetone and 10 kg of the LLDPE-2 were blended to obtain a blend 2. A compatibilizer (Q-2) was obtained in the same manner as the preparation of compatibilizer (Q-1), except that the blend 1 was changed to the blend 2. Table 1 shows the physical properties of compatibilizer (Q-2).

(Preparation of compatibilizer (Q-3))

A solution of 50 g of MAH and 2 g of PERHEXA 25B dissolved in acetone, and 10 kg of EBR-1 were blended to obtain a blend 3. A compatibilizer (Q-3) was obtained in the same manner as the preparation of compatibilizer (Q-1), except that the blend 1 was changed to the blend 3. Table 1 shows the physical properties of compatibilizer (Q-3).

(Preparation of compatibilizer (Q-4))

A solution of 50 g of MAH and 2 g of PERHEXA 25B dissolved in acetone, and 10 kg of EBR-2 were blended to obtain a blend 4. A compatibilizer (Q-4) was obtained in the same manner as the preparation of compatibilizer (Q-1), except that the blend 1 was changed to the blend 4. Table 1 show the physical properties of compatibilizer (Q-4).

(Preparation of compatibilizer (Q-5))

A solution of 50 g of MAH and 2 g of PERHEXA 25B dissolved in acetone, and 10 kg of EBR-3 were blended to obtain a blend 5. A compatibilizer (Q-5) was obtained in the same manner as the preparation of compatibilizer (Q-1), except that the blend 1 was changed to the blend 5. Table 1 shows the physical properties of compatibilizer (Q-5).

Table 1

| Compatibilizer | | | Q-1 | Q-2 | Q-3 | Q-4 | Q-5 |
|---|---|---|---|---|---|---|---|
| Formulation | LLDPE-1 | Parts by mass | 100 | | | | |
| | LLDPE-2 | Parts by mass | | 100 | | | |
| | EBR-1 | Parts by mass | | | 100 | | |
| | EBR-2 | Parts by mass | | | | 100 | |
| | EBR-3 | Parts by mass | | | | | 100 |
| | MAH | Parts by mass | 1.5 | 0.6 | 0.5 | 0.5 | 0.5 |
| | HERHEXA 25B | Parts by mass | 0.06 | 0.02 | 0.02 | 0.02 | 0.02 |
| Physical properties | Degree of modification | % | 1.5 | 0.6 | 0.5 | 0.5 | 0.5 |
| | MFR (190°C) | g/10 min | 4 | 2.8 | 0.9 | 40 | 2.4 |
| | Density | kg/m$^3$ | 920 | 918 | 872 | 870 | 885 |

[Preparation of polar resin component]

The following are preparation methods of the polar resin components (B-1) to (B-3) used in Examples described below.

[Preparation of polar resin component (B-1)]

LLDPE-3, PA6, and the compatibilizer (Q-1) were blended in the mass ration of 70/29/1, respectively, as described in Table 2, and then supplied to a single-screw extruder (L/D=26, 40 mm φ) set at 250°C to prepare pellets of a polar resin component (B-1). The resulting pellets of the polar resin component (B-1) were dried at 80°C for one day and night.

[Preparation of polar resin component (B-2)]

A polar resin component (B-2) was obtained in the same manner as the polar resin component (B-1), except that LLDPE-3, EVOH, and the compatibilizer (Q-1) were blended in the mass ratio of 90/8/2, respectively, as described in Table 2, instead of the blend of the LLDPE-3, PA6, and compatibilizer (Q-1) .

[Preparation of polar resin component (B-3)]

A polar resin component (B-3) was obtained in the same manner as the polar resin component (B-1), except that LLDPE-3, PA6, EVOH, and the compatibilizer (Q-1) were blended in the mass ratio of 64/25/10/1, respectively, as described in Table 2, instead of the blend of the LLDPE-3, PA6, and compatibilizer (Q-1).

Table 2

|  |  |  | B-1 | B-2 | B-3 |
|---|---|---|---|---|---|
| Formulation | LLDPE-3 | % by mass | 70 | 90 | 64 |
|  | PA6 | % by mass | 29 |  | 25 |
|  | EVOH | % by mass |  | 8 | 10 |
|  | Q-1 | % by mass | 1 | 2 | 1 |

[Example 1]

(Production of laminate film)

The resin for skin layers (polyethylene layers) and the polar resin composition for an intermediate layer (polar resin layer) shown below, were supplied to respective extruders, and the extrusion amount of each extruder was set so that a resin temperatures was 250°C and thicknesses of the skin layer, intermediate layer, and skin layer were 10 pm/50 pm/10 $\mu$m in this order, by using a die (die width 350 mm $\varphi$, lip gap 1 mm) to obtain a 70 $\mu$m thick multilayer film by coextrusion molding. The molding speed was 4 m/min.

- Resin for skin layers;
  LLDPE-3
- Polar resin composition for intermediate layer;

A resin composition obtained by blending the LLDPE-3, the polar resin component (R-1), and the compatibilizer (Q-1) in a mass ratio of 20/60/20, respectively.

[Example 2]

A multilayer film was obtained in the same manner as in Example 1, except that the polar resin composition for the intermediate layer was changed to a resin composition obtained by blending the LLDPE-3, the polar resin component (B-1), and the compatibilizer (Q-1) in a mass ratio of 10/60/30, respectively. The results are shown in Table 3.

[Example 3]

A multilayer film was obtained in the same manner as in Example 1, except that the polar resin composition for the intermediate layer was changed to a resin composition obtained by blending the LLDPE-3, the polar resin component (B-1), and the compatibilizer (Q-2) in a mass ratio of 20/60/20, respectively. The results are shown in Table 3.

[Example 4]

A multilayer film was obtained in the same manner as in Example 1, except that the polar resin composition for the intermediate layer was changed to a resin composition obtained by blending the LLDPE-3, the polar resin component (B-1), and the compatibilizer (Q-2) in a mass ratio of 10/60/30, respectively. The results are shown in Table 3.

[Example 5]

A multilayer film was obtained in the same manner as in Example 1, except that the polar resin composition for the intermediate layer was changed to a resin composition obtained by blending the LLDPE-3, the polar resin component (B-1), and the compatibilizer (Q-3) in a mass ratio of 20/60/20, respectively. The results are shown in Table 3.

[Example 6]

A multilayer film was obtained in the same manner as in Example 1, except that the polar resin composition for the intermediate layer was changed to a resin composition obtained by blending the LLDPE-3, the polar resin component (B-1), and the compatibilizer (Q-3) in a mass ratio of 10/60/30, respectively. The results are shown in Table 3.

[Example 7]

A multilayer film was obtained in the same manner as in Example 1, except that the polar resin composition for the intermediate layer was changed to a resin composition obtained by blending the LLDPE-3, the polar resin component (B-1), and the compatibilizer (Q-4) in a mass ratio of 20/60/20, respectively. The results are shown in Table 3.

[Example 8]

A multilayer film was obtained in the same manner as in Example 1, except that the polar resin composition for the intermediate layer was changed to a resin composition obtained by blending the LLDPE-3, the polar resin component (B-1), and the compatibilizer (Q-4) in a mass ratio of 10/60/30, respectively. The results are shown in Table 3.

[Example 9]

A multilayer film was obtained in the same manner as in Example 1, except that the polar resin composition for the intermediate layer was changed to a resin composition obtained by blending the LLDPE-3, the polar resin component (B-1), and the compatibilizer (Q-5) in a mass ratio of 20/60/20, respectively. The results are shown in Table 3.

[Example 10]

A multilayer film was obtained in the same manner as in Example 1, except that the polar resin composition for the intermediate layer was changed to a resin composition obtained by blending the LLDPE-3, the polar resin component (B-1), and the compatibilizer (Q-5) in a mass ratio of 10/60/30, respectively. The results are shown in Table 3.

[Example 11]

A multilayer film was obtained in the same manner as in Example 1, except that the polar resin composition for the intermediate layer was changed to a resin composition obtained by blending the LLDPE-3, the polar resin component (B-2), and the compatibilizer (Q-1) in a mass ratio of 30/60/10, respectively. The results are shown in Table 4.

[Example 12]

A multilayer film was obtained in the same manner as in Example 1, except that the polar resin composition for the intermediate layer was changed to a resin composition obtained by blending the LLDPE-3, the polar resin component (B-2), and the compatibilizer (Q-1) in a mass ratio of 20/60/20, respectively. The results are shown in Table 4.

[Example 13]

A multilayer film was obtained in the same manner as in Example 1, except that the polar resin composition for the intermediate layer was changed to a resin composition obtained by blending the LLDPE-3, the polar resin component (B-2), and the compatibilizer (Q-2) in a mass ratio of 30/60/10, respectively. The results are shown in Table 4.

[Example 14]

A multilayer film was obtained in the same manner as in Example 1, except that the polar resin composition for the intermediate layer was changed to a resin composition obtained by blending the LLDPE-3, the polar resin component (B-2), and the compatibilizer (Q-2) in a mass ratio of 20/60/20, respectively. The results are shown in Table 4.

[Example 15]

A multilayer film was obtained in the same manner as in Example 1, except that the polar resin composition for the intermediate layer was changed to a resin composition obtained by blending the LLDPE-3, the polar resin component (B-2), and the compatibilizer (Q-3) in a mass ratio of 30/60/10, respectively. The results are shown in Table 4.

[Example 16]

A multilayer film was obtained in the same manner as in Example 1, except that the polar resin composition for the intermediate layer was changed to a resin composition obtained by blending the LLDPE-3, the polar resin component (B-2), and the compatibilizer (Q-3) in a mass ratio of 20/60/20, respectively. The results are shown in Table 4.

[Example 17]

A multilayer film was obtained in the same manner as in Example 1, except that the polar resin composition for the intermediate layer was changed to a resin composition obtained by blending the LLDPE-3, the polar resin component (B-2), and the compatibilizer (Q-4) in a mass ratio of 30/60/10, respectively. The results are shown in Table 4.

[Example 18]

A multilayer film was obtained in the same manner as in Example 1, except that the polar resin composition for the intermediate layer was changed to a resin composition obtained by blending the LLDPE-3, the polar resin component (B-2), and the compatibilizer (Q-4) in a mass ratio of 20/60/20, respectively. The results are shown in Table 4.

[Example 19]

A multilayer film was obtained in the same manner as in Example 1, except that the polar resin composition for the intermediate layer was changed to a resin composition obtained by blending the LLDPE-3, the polar resin component (B-2), and the compatibilizer (Q-5) in a mass ratio of 30/60/10, respectively. The results are shown in Table 4.

[Example 20]

A multilayer film was obtained in the same manner as in Example 1, except that the polar resin composition for the intermediate layer was changed to a resin composition obtained by blending the LLDPE-3, the polar resin component (B-2), and the compatibilizer (Q-5) in a mass ratio of 20/60/20, respectively. The results are shown in Table 4.

[Example 21]

A multilayer film was obtained in the same manner as in Example 1, except that the polar resin composition for the intermediate layer was changed to a resin composition obtained by blending the LLDPE-3, the polar resin component (B-3), and the compatibilizer (Q-1) in a mass ratio of 30/60/10, respectively. The results are shown in Table 5.

[Example 22]

A multilayer film was obtained in the same manner as in Example 1, except that the polar resin composition for the intermediate layer was changed to a resin composition obtained by blending the LLDPE-3, the polar resin component (B-3), and the compatibilizer (Q-1) in a mass ratio of 20/60/20, respectively. The results are shown in Table 5.

[Example 23]

A multilayer film was obtained in the same manner as in Example 1, except that the polar resin composition for the intermediate layer was changed to a resin composition obtained by blending the LLDPE-3, the polar resin component (B-3), and the compatibilizer (Q-3) in a mass ratio of 30/60/10, respectively. The results are shown in Table 5.

[Example 24]

A multilayer film was obtained in the same manner as in Example 1, except that the polar resin composition for the intermediate layer was changed to a resin composition obtained by blending the LLDPE-3, the polar resin component (B-3), and the compatibilizer (Q-4) in a mass ratio of 30/60/10, respectively. The results are shown in Table 5.

[Example 25]

A multilayer film was obtained in the same manner as in Example 1, except that the polar resin composition for the intermediate layer was changed to a resin composition obtained by blending the LLDPE-3, the polar resin component (B-3), and the compatibilizer (Q-4) in a mass ratio of 20/60/20, respectively. The results are shown in Table 5.

[Comparative Example 1]

A multilayer film was obtained in the same manner as in Example 1, except that the polar resin composition for the intermediate layer was changed to a resin composition obtained by blending the LLDPE-3 and the polar resin component (B-1) in a mass ration of 40/60, respectively. The results are shown in Table 6.

[Comparative Example 2]

A multilayer film was obtained in the same manner as in Example 1, except that the polar resin composition for the intermediate layer was changed to a resin composition obtained by blending the LLDPE-3 and the polar resin component (B-2) in a mass ratio of 40/60, respectively. The results are shown in Table 6.

[Comparative Example 3]

A multilayer film was obtained in the same manner as in Example 1, except that the polar resin composition for the intermediate layer was changed to a resin composition obtained by blending the LLDPE-3, the polar resin component (B-2), and the compatibilizer (Q-1) in a mass ratio of 35/60/5, respectively. The results are shown in Table 6.

[Comparative Example 4]

A multilayer film was obtained in the same manner as in Example 1, except that the polar resin composition for the intermediate layer was changed to a resin composition obtained by blending the LLDPE-3, the polar resin component (B-2), and the compatibilizer (Q-4) in a mass ratio of 35/60/5, respectively. The results are shown in Table 6.

[Comparative Example 5]

A multilayer film was obtained in the same manner as in Example 1, except that the polar resin composition for the intermediate layer was changed to a resin composition obtained by blending the LLDPE-3 and the polar resin component (B-3) in a mass ratio of 40/60, respectively. The results are shown in Table 6.

[Comparative Example 6]

A multilayer film was obtained in the same manner as in Example 1, except that the polar resin composition for the intermediate layer was changed to the LLDPE-3. The results are shown in Table 6.

Table 3

| | | | Example 1 | Example 2 | Example 3 | Example 4 | Example 5 |
|---|---|---|---|---|---|---|---|
| Formulation | LLDPE-3 | % by mass | 20 | 10 | 20 | 10 | 20 |
| | Polar resin component (B-1) | % by mass | 60 | 60 | 60 | 60 | 60 |
| | Compatibilizer (Q-1) | % by mass | 20 | 30 | | | |
| | Compatibilizer (Q-2) | % by mass | | | 20 | 30 | |
| | Compatibilizer (Q-3) | % by mass | | | | | 20 |
| | Compatibilizer (Q-4) | % by mass | | | | | |
| | Compatibilizer (Q-5) | % by mass | | | | | |
| Tensile properties | Tensile strength at break | MPa | 28 | 28 | 28 | 28 | 26 |
| | Tensile elongation at break | % | 520 | 520 | 530 | 530 | 540 |
| | Tensile modulus | MPa | 260 | 230 | 260 | 260 | 170 |
| Puncture energy | | mJ | 15 | 18 | 15 | 15 | 24 |
| Film impact | | kJ/m | 24 | 25 | 24 | 25 | 24 |
| Internal haze | | % | 3 | 3 | 4 | 4 | 3 |
| | | | Example 6 | Example 7 | Example 8 | Example 9 | Example 10 |
| Formulation | LLDPE-3 | % by mass | 10 | 20 | 10 | 20 | 10 |
| | Polar resin component (B-1) | % by mass | 60 | 60 | 60 | 60 | 60 |
| | Compatibilizer (Q-1) | % by mass | | | | | |
| | Compatibilizer (Q-2) | % by mass | | | | | |
| | Compatibilizer (Q-3) | % by mass | 30 | | | | |
| | Compatibilizer (Q-4) | % by mass | | 20 | 30 | | |
| | Compatibilizer (Q-5) | % by mass | | | | 20 | 30 |
| Tensile properties | Tensile strength at break | MPa | 27 | 22 | 22 | 26 | 26 |
| | Tensile elongation at break | % | 540 | 590 | 650 | 530 | 540 |
| | Tensile modulus | MPa | 160 | 180 | 150 | 210 | 170 |

(continued)

|  |  | Example 6 | Example 7 | Example 8 | Example 9 | Example 10 |
|---|---|---|---|---|---|---|
| Puncture energy | mJ | 28 | 15 | 18 | 16 | 25 |
| Film impact | kJ/m | 25 | 22 | 22 | 23 | 21 |
| Internal haze | % | 4 | 5 | 6 | 4 | 2 |

Table 4

| | | | | Example 11 | Example 12 | Example 13 | Example 14 | Example 15 |
|---|---|---|---|---|---|---|---|---|
| Formulation | LLDPE-3 | % by mass | | 30 | 20 | 30 | 20 | 30 |
| | Polar resin component (B-2) | % by mass | | 60 | 60 | 60 | 60 | 60 |
| | Compatibilizer (Q-1) | % by mass | | 10 | 20 | | | |
| | Compatibilizer (Q-2) | % by mass | | | | 10 | 20 | |
| | Compatibilizer (Q-3) | % by mass | | | | | | 10 |
| | Compatibilizer (Q-4) | % by mass | | | | | | |
| | Compatibilizer (Q-5) | % by mass | | | | | | |
| Tensile properties | Tensile strength at break | MPa | | 22 | 24 | 24 | 22 | 19 |
| | Tensile elongation at break | % | | 596 | 622 | 632 | 598 | 558 |
| | Tensile modulus | MPa | | 327 | 318 | 320 | 323 | 251 |
| Puncture energy | | mJ | | 10 | 10 | 10 | 10 | 10 |
| Film impact | | kJ/m | | 15 | 20 | 15 | 16 | 20 |
| Internal haze | | % | | 4 | 4 | 3 | 3 | 3 |

(continued)

| | | | Example 16 | Example 17 | Example 18 | Example 19 | Example 20 |
|---|---|---|---|---|---|---|---|
| Formulation | LLDPE-3 | % by mass | 20 | 30 | 20 | 30 | 20 |
| | Polar resin component (B-2) | % by mass | 60 | 60 | 60 | 60 | 60 |
| | Compatibilizer (Q-1) | % by mass | | | | | |
| | Compatibilizer (Q-2) | % by mass | | | | | |
| | Compatibilizer (Q-3) | % by mass | 20 | | | | |
| | Compatibilizer (Q-4) | % by mass | | 10 | 20 | | |
| | Compatibilizer (Q-5) | % by mass | | | | 10 | 20 |
| Tensile properties | Tensile strength at break | MPa | 21 | 21 | 21 | 18 | 22 |
| | Tensile elongation at break | % | 574 | 628 | 674 | 548 | 610 |
| | Tensile modulus | MPa | 215 | 284 | 222 | 293 | 258 |
| Puncture energy | | mJ | 16 | 10 | 10 | 10 | 10 |
| Film impact | | kJ/m | 20 | 14 | 20 | 17 | 20 |
| Internal haze | | % | 3 | 5 | 5 | 4 | 3 |

Table 5

| | | | Example 21 | Example 22 | Example 23 | Example 24 | Example 25 |
|---|---|---|---|---|---|---|---|
| Formulation | LLDPE-3 | % by mass | 30 | 20 | 30 | 30 | 20 |
| | Polar resin component (B-3) | % by mass | 60 | 60 | 60 | 60 | 60 |
| | Compatibilizer (Q-1) | % by mass | 10 | 20 | | | |
| | Compatibilizer (Q-2) | % by mass | | | | | |
| | Compatibilizer (Q-3) | % by mass | | | 10 | | |
| | Compatibilizer (Q-4) | % by mass | | | | 10 | 20 |
| | Compatibilizer (Q-5) | % by mass | | | | | |

(continued)

| | | | Example 21 | Example | 22 Example | 23 Example | 24 Example 25 |
|---|---|---|---|---|---|---|---|
| Tensile properties | Tensile strength at break | MPa | 26 | 28 | 26 | 23 | 21 |
| | Tensile elongation at break | % | 510 | 510 | 516 | 548 | 576 |
| | Tensile modulus | MPa | 308 | 320 | 242 | 239 | 194 |
| Puncture energy | | mJ | 24 | 25 | 30 | 22 | 24 |
| Film impact | | kJ/m | 22 | 25 | 24 | 23 | 23 |
| Internal haze | | % | 4 | 3 | 5 | 5 | 7 |

Table 6

| | | | Comp. Example 1 | Comp. Example 2 | Comp. Example 3 | Comp. Example 4 | Comp. Example 5 | Comp. Example 6 |
|---|---|---|---|---|---|---|---|---|
| Formulation | LLDPE-3 | % by mass | 40 | 40 | 35 | 35 | 40 | 100 |
| | Polar resin component (B-1) | % by mass | 60 | | | | | |
| | Polar resin component (B-2) | % by mass | | 60 | 60 | 60 | | |
| | Polar resin component (B-3) | % by mass | | | | | 60 | |
| | Compatibilizer (Q-1) | % by mass | | | 5 | | | |
| | Compatibilizer (Q-2) | % by mass | | | | | | |
| | Compatibilizer (Q-3) | % by mass | | | | | | |
| | Compatibilizer (Q-4) | % by mass | | | | 5 | | |
| | Compatibilizer (Q-5) | % by mass | | | | | | |
| Tensile properties | Tensile strength at break | MPa | 26 | 24 | 22 | 22 | 27 | 26 |
| | Tensile elongation at break | % | 570 | 610 | 612 | 652 | 524 | 660 |
| | Tensile modulus | MPa | 310 | 300 | 340 | 339 | 326 | 230 |
| | Puncture energy | mJ | 13 | 10 | 10 | 10 | 14 | 19 |
| | Film impact | kJ/m | 17 | 11 | 12 | 12 | 13 | 11 |
| | Internal haze | % | 12 | 4 | 5 | 5 | 15 | 1 |

**Claims**

1. A polar resin composition comprising:

   5 to 30% by mass of an ethylenic polymer (A),
   40 to 85% by mass of a polar resin component (B), and
   10 to 40% by mass of a modified ethylene/$\alpha$-olefin copolymer (C) obtained by modifying an ethylene/$\alpha$-olefin copolymer (C0) with an unsaturated carboxylic acid or a derivative thereof and satisfying the following requirement (C-1), provided that the sum of proportions of the ethylenic polymer (A), the polar resin component (B), and the copolymer (C) is 100% by mass:
   Requirement (C-1): The melt flow rate (190°C, 2.16 kg load) is 0.1 to 50 g/10 minutes.

2. The polar resin composition according to claim 1, wherein the modified ethylene/$\alpha$-olefin copolymer (C) satisfies the following requirement (C-2):
   Requirement (C-2): The density is 850 to 930 kg/m$^3$.

3. The polar resin composition according to claim 1 or 2, wherein the resin component (B) is a mixture comprising:

   50 to 90% by mass of an ethylenic polymer (BA),
   5 to 49.5% by mass of a polar resin (BB), and
   0.5 to 5% by mass of a modified ethylene/$\alpha$-olefin copolymer (BC), provided that the sum of proportions of the ethylenic polymer (BA), the polar resin (BB), and the modified ethylene/$\alpha$-olefin copolymer (BC) is 100% by mass.

4. The polar resin composition according to any one of claims 1 to 3, wherein the polar resin component (B) comprises a polar resin (BB) selected from the group consisting of a polyamide resin, a polyester resin, an ethylene/vinyl alcohol copolymer, and an ethylene/vinyl acetate copolymer, and combinations thereof.

5. The polar resin composition according to claim 4, wherein the polyamide resin is an aliphatic polyamide resin.

6. A laminate comprising a polyethylene layer, a polar resin layer formed of the polar resin composition according to any one of claims 1 to 5, and a polyethylene layer, stacked in this order.

7. The laminate according to claim 6 having a film impact strength measured in accordance with JIS P8134 of 20 kJ/m or more.

8. The laminate according to claim 6 or 7 having an internal haze measured in accordance with JIS K7136 of 10% or less.

9. A regrind material obtained by pulverizing a formed product of the polar resin composition according to any one of claims 1 to 5.

## INTERNATIONAL SEARCH REPORT

| International application No. |
| --- |
| **PCT/JP2022/010189** |

**A.    CLASSIFICATION OF SUBJECT MATTER**

*C08L 101/02*(2006.01)i; *B32B 27/32*(2006.01)i; *C08L 23/04*(2006.01)i; *C08L 23/26*(2006.01)i; *C08L 29/04*(2006.01)i; *C08L 77/00*(2006.01)i

FI:    C08L101/02; C08L23/04; C08L23/26; B32B27/32 E; B32B27/32 103; C08L77/00; C08L29/04 S

According to International Patent Classification (IPC) or to both national classification and IPC

**B.    FIELDS SEARCHED**

Minimum documentation searched (classification system followed by classification symbols)

C08L101/02; B32B27/32; C08L23/04; C08L23/26; C08L29/04; C08L77/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| X | JP 6-155665 A (MITSUBISHI KASEI CORP) 03 June 1994 (1994-06-03)<br>    claims, paragraphs [0008], [0018], [0020], [0036]-[0053] | 1-9 |
| X | JP 2008-150539 A (DAINIPPON PRINTING CO LTD) 03 July 2008 (2008-07-03)<br>    claims, paragraphs [0049]-[0051] | 1-7, 9 |
| A | | 8 |
| A | JP 2007-190876 A (SUMITOMO BAKELITE CO LTD) 02 August 2007 (2007-08-02)<br>    paragraph [0038] | 1-9 |
| X | JP 2004-307566 A (MITSUBISHI ENGINEERING PLASTICS CORP) 04 November 2004<br>(2004-11-04)<br>    paragraphs [0029]-[0031] | 1-5, 9 |
| A | | 6-8 |

| ✓ Further documents are listed in the continuation of Box C. | ✓ See patent family annex. |
| --- | --- |

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **11 May 2022** | **24 May 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/010189**

C.    DOCUMENTS CONSIDERED TO BE RELEVANT

| Category* | Citation of document, with indication, where appropriate, of the relevant passages | Relevant to claim No. |
|---|---|---|
| X | JP 2-29331 A (MITSUI PETROCHEMICAL INDUSTRIES, LTD) 31 January 1990 (1990-01-31) examples | 1-5, 9 |
| A | | 6-8 |

Form PCT/ISA/210 (second sheet) (January 2015)

**INTERNATIONAL SEARCH REPORT**
Information on patent family members

| International application No. |
| PCT/JP2022/010189 |

| Patent document cited in search report | | | Publication date (day/month/year) | Patent family member(s) | Publication date (day/month/year) |
|---|---|---|---|---|---|
| JP | 6-155665 | A | 03 June 1994 | (Family: none) | |
| JP | 2008-150539 | A | 03 July 2008 | (Family: none) | |
| JP | 2007-190876 | A | 02 August 2007 | (Family: none) | |
| JP | 2004-307566 | A | 04 November 2004 | (Family: none) | |
| JP | 2-29331 | A | 31 January 1990 | US 5055526 A<br>examples<br>US 5128411 A<br>EP 315418 A2<br>KR 10-1989-0008281 A<br>CN 1034007 A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5147177 A
- JP 9302170 A
- JP 2015535311 A
- WO 2012133008 A